# EUROPEAN PATENT APPLICATION

(11) **EP 4 489 126 A1**
(43) Date of publication of application: **08.01.2025**
(21) Application number: 22934126.8
(22) Date of filing: 30.03.2022
(51) Int. Cl.: H01M 4/525, H01M 4/36, H01M 10/0525

(54) **POSITIVE ELECTRODE MATERIAL, ELECTROCHEMICAL APPARATUS AND ELECTRIC DEVICE**

(71) Applicant: Ningde Amperex Technology Limited, Ningde, Fujian 352100 (CN)
(72) Inventor: LIU, Xiaolang, Ningde, Fujian 352100 (CN)
(74) Representative: Klunker IP Patentanwälte PartG mbB
(86) International application number: PCT/CN2022/084200
(87) International publication number: WO 2023/184275

(57) **Abstract**

This application relates to a positive electrode material, an electrochemical apparatus, and an electric device. The positive electrode material includes a matrix and a coating material located on at least a portion of a surface of the matrix. The matrix includes a first compound having a P6₃mc structure, and the coating material includes a second compound having an R-3m structure. The positive electrode material can have a high gram capacity and cycling stability at a high voltage.

## Description

### TECHNICAL FIELD

This application relates to the field of electrochemical energy storage, and in particular, to a positive electrode material, an electrochemical apparatus and an electric device including such positive electrode material.

### BACKGROUND

With advantages such as high energy density, good cycling stability, high operating voltage, and environmental friendliness, lithium-ion batteries dominate the energy storage field, and are widely used in fields such as portable electronic devices, energy storage grids, and electric vehicles. Among the commercially available common positive electrode materials, lithium cobalt oxide has become the mainstream positive electrode material for lithium-ion batteries in consumer electronic products due to its high volumetric energy density. To meet the growing demand for high energy density in lithium-ion batteries, more lithium ions need to be extracted from the lattice of the lithium cobalt oxide material. The most direct way is to increase the charge voltage of lithium cobalt oxide. However, in this method, lithium cobalt oxide suffers rapid cycling degradation at high voltage, affecting the service life of batteries.

### SUMMARY

In view of the above technical problem, this application provides a positive electrode material having a coating structure. The positive electrode material includes a matrix having a P6₃mc structure and a coating material having an R-3m structure. This positive electrode material having a coating structure can have a high gram capacity and cycling stability at a high voltage. This application also provides an electrochemical apparatus and an electric device including the above positive electrode material having a coating structure.

According to a first aspect of this application, a positive electrode material is provided, including a matrix and a coating material located on at least a portion of a surface of the matrix; where, the matrix includes a first compound having a P6₃mc structure, and the coating material includes a second compound having an R-3m structure.

In some embodiments, the coating material has a thickness of 10 nm to 300 nm. In some embodiments, the coating material has a thickness of 30 nm to 200 nm.

In some embodiments, the first compound is lithium cobalt oxide, and the first compound includes element Co and optional element T, where, the element T includes at least one of Ni, Mn, Ti, Zn, Y, La, Zr, Mg, Fe, Cu, Nb, Cr, or Al; and in the first compound, a sum of molar contents of the element Co and the element T is n_{Co+T}, the molar content of the element T is n_{T}, and a ratio y1 of n_{T} to n_{Co+T} satisfies 0≤y1≤0.15.

In some embodiments, the first compound further includes element Na, in the first compound, a molar content of the element Na is n_{Na}, and a ratio z1 of n_{Na} to n_{Co+T} satisfies 0<z1≤0.03.

In some embodiments, the second compound is lithium cobalt oxide, and the second compound includes element Co and optional element Q, where, the element Q includes at least one of Ni, Mn, Ti, Zn, Y, La, Zr, Mg, Fe, Cu, Nb, Cr, or Al; and in the second compound, a sum of molar contents of the element Co and the element Q is m_{Co+Q}, the molar content of the element Q is m_{Q}, and a ratio y2 of m_{Q} to m_{Co+Q} satisfies 0≤y2≤0.5.

In some embodiments, the second compound further includes element Na, in the second compound, a molar content of the element Na is m_{Na}, and a ratio z2 of M_{Na} to m_{Co+Q} satisfies 0<z2≤0.03.

In some embodiments, in an X-ray diffraction pattern of the positive electrode material, a peak intensity of a strongest diffraction peak in a 2θ diffraction angle range of 18°-19° is I₁, and a peak intensity of a strongest diffraction peak in a 2θ diffraction angle range of 44°-46° is I₂, satisfying 1%≤I₂/I₁≤11%.

In some embodiments, a mass percentage m of the coating material in the positive electrode material satisfies 0<m≤10%, where, m being obtained through XRD refined quantitative phase analysis.

In some embodiments, a median particle size Dᵥ50 of the positive electrode material is 10 µm to 25 µm.

According to a second aspect of this application, an electrochemical apparatus is provided, including a positive electrode plate, where the positive electrode plate includes the positive electrode material according to any one of the foregoing embodiments.

According to a third aspect of this application, an electric device is provided, including the electrochemical apparatus according to the second aspect of this application.

It has been found through research that when the positive electrode material has a matrix with a P6₃mc structure and a coating material with an R-3m structure, this coating structure can be denoted as an R-3m@P6₃mc coating structure. At a high voltage (for example, greater than 4.5 V), the P6₃mc structure of the matrix of the positive electrode material has a high reversible capacity, and the R-3m structure of the coating material can undergo a spinel phase transition to form a stable spinel phase transition layer. This provides good protection for the surface of the P6₃mc structure of the matrix of the positive electrode material and can also inhibit the dissolution of transition metals. Therefore, when the positive electrode material having the R-3m@P6₃mc coating structure is used as a positive electrode active material to prepare a lithium-ion battery and charged to a high voltage (for example, 4.6 V), it can achieve a high gram capacity and cycling stability.

### BRIEF DESCRIPTION OF DRAWINGS

To more clearly illustrate the technical solutions in embodiments of this application and to provide more complete understanding for this application and its beneficial effects, the following briefly describes the accompanying drawings required for describing embodiments. It is apparent that the drawings described below are merely some embodiments of this application, and for those skilled in the art, other drawings can also be obtained based on these drawings.
FIG. 1 is a schematic diagram of a positive electrode material having an R-3m@P6₃mc coating structure according to an embodiment of this application;
FIG. 2 is an XRD pattern of lithium cobalt oxide having an R-3m structure prepared in Comparative example 1 of this application;
FIG. 3 shows XRD patterns of three materials prepared in Comparative example 2 of this application. The three XRD patterns from bottom to top respectively correspond to a cobalt oxide precursor prepared in Comparative example 2, a sodium cobalt oxide precursor having a P6₃/mmc structure prepared in Comparative example 2, and lithium cobalt oxide having a P6₃mc structure prepared in Comparative example 2;
FIG. 4 shows an XRD pattern of lithium cobalt oxide having an R-3m@P6₃mc coating structure prepared in Example 4 of this application; and
FIG. 5 shows an XRD pattern of a remaining matrix having a P6₃mc structure of lithium cobalt oxide having an R-3m@P6₃mc coating structure prepared in Example 4 of this application after aqua regia treatment.

Reference numerals in the accompanying drawings: 100, matrix; and 200, coating material.

### DESCRIPTION OF EMBODIMENTS

The following provides a more detailed description of this application with reference to accompanying drawings, embodiments, and examples. It should be understood that embodiments and examples are only for describing this application and not for limiting its scope. An objective of providing embodiments and examples is to make the understanding for the disclosed content of this application more thorough and comprehensive. It should also be understood that this application can be implemented in many different forms and is not limited to the embodiments and examples described in this application. Various modifications or changes can be made by those skilled in the art without departing from the essence of this application, and the obtained equivalent forms also fall within the protection scope of this application.

Unless otherwise defined, all technical and scientific terms used in this application shall have the same meanings as commonly understood by persons skilled in the art to which this application belongs. The terms used in the specification of this application are intended to merely describe the implementations and embodiments rather than to limit this application.

The traditional lithium cobalt oxide materials (typically, the LiCoO₂ material) generally have an R-3m crystal structure. During charged to a high voltage (for example, greater than or equal to 4.6 V vs. Li⁺/Li), more lithium ions can be extracted from the lattice, thereby achieving a higher capacity. However, especially after the extraction amount of lithium ions exceeds 0.5 mol at a high voltage, the traditional lithium cobalt oxide material is prone to irreversible phase transition (for example, from O3 to H1-3), and a side reaction occurs at an interface between the positive electrode material and an electrolyte, leading to rapid cycling degradation. High-concentration doping (with, for example, Al, Mg, or Ti) can alleviate the irreversible phase transition to a certain extent, but this significantly deteriorates capacity performance.

Lithium cobalt oxide that belongs to the P6₃mc space group is in a low-temperature metastable state, which can be prepared by exchanging sodium ions in sodium-containing oxide with lithium at a low temperature. The advantage of the lithium cobalt oxide material is that even when charged to a high voltage (for example, greater than or equal to 4.6 V vs. Li⁺/Li), lithium in the lattice nearly deintercalates completely, with its crystal structure still remaining intact. In other words, lithium cobalt oxide belonging to the P6₃mc space group has better structural reversibility at a high voltage. However, the drawbacks of lithium cobalt oxide belonging to the P6₃mc space group are also obvious. The lithium cobalt oxide material is unstable at high temperature, easily undergoing phase transition when heated above 300°C. Its interface, unlike that of the conventional lithium cobalt oxide with an R-3m structure, cannot be stabilized through high-temperature coating treatment, and low-temperature coating is difficult to achieve. As a result, the material is basically in an exposed state in the battery and in direct contact with the electrolyte, causing severe interface side reaction. Additionally, cobalt ions continually dissolve during cycling, damaging the anode SEI (solid electrolyte interphase) film, and consequently long-term cycling performance cannot meet practical application needs. In the prior art, for the lithium cobalt oxide material with a P6₃mc structure, only a low-temperature liquid phase coating process can be used, but is difficult to achieve effective surface coating. And the interface side reaction at a high voltage is difficult to fundamentally suppress, and the liquid phase coating process is complex, costly, and challenging for industrial production.

### First aspect of this application

According to a first aspect of this application, a positive electrode material having a coating structure is provided, including a matrix and a coating material located on at least a portion of a surface of the matrix; where, the matrix includes a first compound having a P6₃mc structure, and the coating material includes a second compound having an R-3m structure. The coating structure in the positive electrode material can be denoted as an R-3m@P6₃mc coating structure.

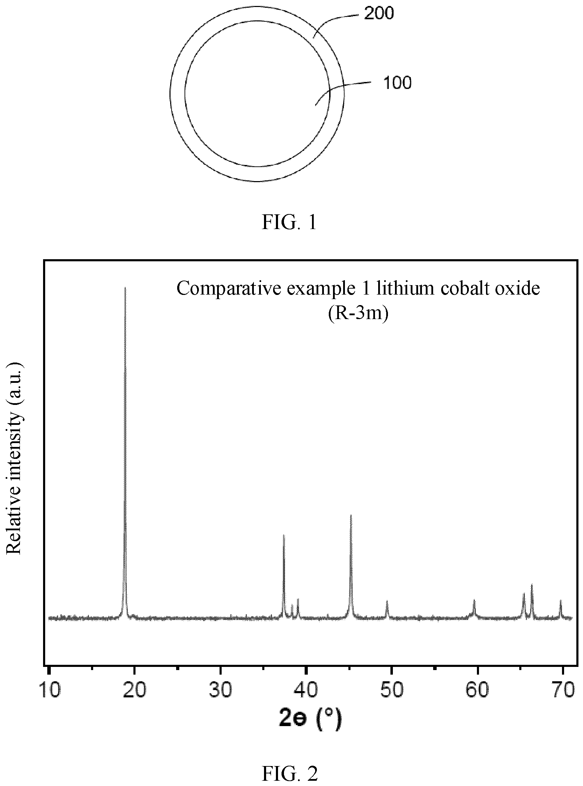

FIG. 1 is a schematic diagram of a positive electrode material having an R-3m@P6₃mc coating structure according to an embodiment of this application, including a matrix 100 having a P6₃mc structure and a coating material 200 having an R-3m structure.

In some embodiments, the coating material 200 exists on a partial region of the surface of the matrix 100, that is, the matrix is only partially coated, and the coating material is present on a partial surface of the matrix. In some embodiments, the coating material 200 exists on the entire region of the surface of the matrix 100, that is, the matrix is completely coated, and the coating material is present on the entire surface of the matrix.

It has been found through research that when the positive electrode material has a matrix with a P6₃mc structure and a coating material with an R-3m structure, at a high voltage (for example, greater than 4.5 V), the P6₃mc structure of the matrix of the positive electrode material has a high reversible capacity, and the R-3m structure of the coating material can undergo a spinel phase transition to form a stable spinel phase transition layer. This provides good protection for the surface of the P6₃mc structure of the matrix of the positive electrode material and can also inhibit the dissolution of transition metals. Therefore, when the positive electrode material having the R-3m@P6₃mc coating structure is used as a positive electrode active material to prepare a lithium-ion battery and charged to a high voltage (for example, greater than or equal to 4.6 V), it can achieve a high gram capacity and cycling stability.

In some embodiments, the matrix mainly includes a first compound. In some embodiments, the coating material mainly includes a second compound. In some embodiments, the matrix is mainly formed by the first compound, and the coating material is mainly formed by the second compound.

In this application, "structure A is mainly formed by material a" means that material a is the main active material providing the active function of structure A. Generally, structure A includes only material a, but does not completely exclude other coexisting substances. However, it should be understood that even if other coexisting substances are present, these substances do not affect the main performance of material a. It should be understood that a mass percentage of material a in structure A is large, for example, being greater than 80%, 85%, 90%, 95%, or 99%, or even being 100%.

In some embodiments, the first compound is a first lithium cobalt oxide. In some embodiments, the second compound is a second lithium cobalt oxide.

In this application, "lithium cobalt oxide" refers to a substance that at least includes elements Li, Co, and O.

In some embodiments, in the positive electrode material having a coating structure, the matrix includes the first lithium cobalt oxide having a P6₃mc crystal structure, and the coating material includes the second lithium cobalt oxide having an R-3m crystal structure. In some embodiments, in the positive electrode material having a coating structure, the matrix is the first lithium cobalt oxide having a P6₃mc crystal structure, and the coating material is the second lithium cobalt oxide having an R-3m crystal structure.

The advantages of the positive electrode material having the R-3m@P6₃mc coating structure include but are not limited to: (1) During lithium deintercalation/intercalation, the first lithium cobalt oxide having a P6₃mc structure in the matrix of the positive electrode material has higher phase transition reversibility at a high voltage than the traditional lithium cobalt oxide with an R-3m structure, showing a high reversible capacity; (2) At a high voltage (for example, greater than 4.5 V), the second lithium cobalt oxide with an R-3m structure in the coating material undergoes a spinel phase transition, forming a stable spinel phase transition layer. The interface is stable, providing good protection for the first lithium cobalt oxide with a P6₃mc structure in the matrix, inhibiting the dissolution of transition metal, and resulting in better high-voltage cycling stability than lithium cobalt oxide having a pure P6₃mc structure; (3) This positive electrode material can be obtained using the following method: Converting the original disadvantage of the spinel phase transition into the technical advantage of this application in a simple way. Specifically, lithium cobalt oxide belonging to the P6₃mc space group is annealed at a certain temperature (for example, below 300°C), and the surface layer undergoes an in-situ phase transition to R-3m, thereby forming a coating structured material with a matrix belonging to the P6₃mc space group and a coating material belonging to the R-3m space group. This not only provides a new direction for modifying performance of the lithium cobalt oxide positive electrode material but also has simple preparation process, low cost, strong practicality, and significant potential for industrial application.

In some embodiments, the mass percentage of the coating material in the positive electrode material (denoted as m) satisfies 0<m≤10%, where, m being obtained through XRD refined quantitative phase analysis. m may further be ≤5.5% (that is, 0<m≤5.5%), ≤5%, or ≤4.5%. m may be selected from any of the following percentages or in a percentage range defined by any two of these percentages: 0.1%, 0.2%, 0.4%, 0.5%, 0.6%, 0.8%, 1%, 1.5%, 2%, 2.5%, 3%, 3.5%, 4%, 4.2%, 4.4%, 4.5%, 4.6%, 4.8%, 5%, 5.5%, 6%, 7%, 8%, 9%, 10%, or the like.

In some embodiments, the coating material has a thickness of 10 nm to 300 nm. The thickness of the coating material may also be selected from any of the following values or in a range defined by any two of these values: 10 nm, 20 nm, 50 nm, 80 nm, 100 nm, 120 nm, 150 nm, 170 nm, 190 nm, 200 nm, 250 nm, or 300 nm.

In some embodiments, a median particle size Dᵥ50 of the positive electrode material is 10 µm to 25 µm.

The matrix and the coating material may have the same or different chemical elements, but the matrix should have a P6₃mc structure and the coating material should have an R-3m structure.

In some embodiments, the first compound includes element Co and optional element T, and the element T includes at least one of Ni, Mn, Ti, Zn, Y, La, Zr, Mg, Fe, Cu, Nb, Cr, or Al.

In some embodiments, in the first compound, a sum of molar contents of the element Co and the element T is n_{Co+T}, the molar content of the element T is n_{T}, and a ratio y1 of n_{T} to n_{Co+T} satisfies 0≤y1≤0.15.

In some embodiments, the first compound further includes element Li, in the first compound, a molar content of the element Li is n_{Li}, and a ratio x1 of n_{Li} to n_{Co+T} satisfies 0.6≤x1≤0.95.

In some embodiments, the first compound further includes element Na.

In some embodiments, in the first compound, a molar content of the element Na is n_{Na}, and a ratio z1 of n_{Na} to n_{Co+T} satisfies 0<z1≤0.03.

In some embodiments, the first compound is Liₓ₁Na_{z1}Co_{1-y1}T_{y1}O_{2±b1}, where 0.6≤x1≤0.95, 0<z1≤0.03, 0≤y1≤0.15, and 0≤b1≤0.2.

In some embodiments, the second compound includes element Co and optional element Q, and the element Q includes at least one of Ni, Mn, Ti, Zn, Y, La, Zr, Mg, Fe, Cu, Nb, Cr, or Al.

In some embodiments, in the second compound, a sum of molar contents of the element Co and the element Q is m_{Co+Q}, the molar content of the element Q is m_{Q}, and a ratio y2 of m_{Q} to m_{Co+Q} satisfies 0≤y2≤0.5.

In some embodiments, the second compound further includes element Li, in the second compound, a molar content of the element Li is m_{Li}, and a ratio x2 of m_{Li} to m_{Co+Q} satisfies 0.6≤x2≤1.2. In some embodiments, 0.8≤x2≤1.1.

In some embodiments, the second compound further includes element Na.

In some embodiments, in the second compound, a molar content of the element Na is m_{Na}, and a ratio z2 of m_{Na} to m_{Co+Q} satisfies 0<z2≤0.03.

In some embodiments, the second compound is Liₓ₂Na_{z2}Co_{1-y2}Q_{y2}O_{2±b2}, where 0.6≤x2≤1.2, 0≤z2≤0.03, 0≤y2≤0.15, and 0≤b2≤0.2.

The crystal structures of the matrix and the coating material can be identified by characteristic diffraction peaks in the XRD patterns obtained by the X-ray diffraction (XRD) method.

In some embodiments, the X-ray diffraction pattern is obtained through Cu-Kα radiation, where the target material for the XRD test is Cu-Kα.

In some embodiments, in the X-ray diffraction pattern of the positive electrode material having a coating structure, the strongest diffraction peak of the matrix is the (002) crystal plane diffraction peak of the P6₃mc structure. In some embodiments, this (002) crystal plane diffraction peak is in the range of 18°-19°.

In some embodiments, in the X-ray diffraction pattern of the positive electrode material having a coating structure, the strongest diffraction peak of the coating material is the (003) crystal plane diffraction peak of the R-3m structure. In some embodiments, this (003) crystal plane diffraction peak is in the range of 18°-19°.

In some embodiments, a peak intensity of a strongest diffraction peak in a 2θ diffraction angle range of 18°-19° is I₁, and a peak intensity of a strongest diffraction peak in a 2θ diffraction angle range of 44°-46° is I₂, satisfying 1%≤I/I≤10%. In some of these embodiments, there is only one characteristic diffraction peak in a 2θ diffraction angle range of 44°-46° (it should be understood that noise is not considered). The diffraction peak in the 2θ diffraction angle range of 44°-46°corresponds to the (104) crystal plane diffraction peak of lithium cobalt oxide having an R-3m structure and can be used as a characteristic diffraction peak to identify whether lithium cobalt oxide having an R-3m structure exists.

### Second aspect of this application

According to a second aspect of this application, a preparation method for a positive electrode material having a coating structure is provided. This method can be used for preparing the positive electrode material having a coating structure according to the first aspect of this application, but is not limited to preparing the positive electrode material having a coating structure according to the first aspect of this application.

In some embodiments, the positive electrode material having a coating structure is prepared by enabling the surface layer of a positive electrode active material having a P6₃mc structure to undergo an in-situ phase transition to form a coating material having an R-3m structure.

In some embodiments, a preparation method for a positive electrode material having a coating structure is provided, including the following steps: providing a positive electrode active material having a P6₃mc structure; and annealing the positive electrode active material having a P6₃mc structure, and enabling the surface layer of the positive electrode active material having a P6₃mc structure to undergo an in-situ phase transition to form a coating material having an R-3m structure, thereby obtaining a positive electrode material having a coating structure.

As the annealing temperature increases, the R-3m phase transition on the surface layer of the positive electrode active material having a P6₃mc structure gradually increases, and the relative content of the coating material having an R-3m structure also increases. In some embodiments of this application, it has been found that when the annealing temperature exceeds 300°C, the phase transition significantly accelerates, and the relative content of the coating material having an R-3m structure also increases rapidly.

In some embodiments, the annealing temperature can be selected from 250°C-300°C. The annealing temperature can further be selected from any one of the following temperatures or in a temperature interval defined by any two of these temperatures: 250°C, 255°C, 260°C, 265°C, 270°C, 275°C, 280°C, 285°C, 290°C, 295°C, or the like.

In some embodiments, as the annealing time increases, the relative content of the coating material having an R-3m structure gradually increases.

In some embodiments, the annealing time can be selected from 0.5 h-4 h. The annealing time can further be selected from any one of the following durations or in an interval defined by any two of these durations: 0.5 h (30 min), 0.75 h, 1 h, 1.5 h, 2 h, 2.5 h, 3 h, 3.5 h, 4 h, or the like.

The annealing temperature and annealing time can be combined in an appropriate manner. In some embodiments, the annealing temperature is 250°C-300°C, and the annealing time is 0.5 h-4 h. The annealing temperature and annealing time can be selected from suitable values or suitable ranges according to any one of the foregoing embodiments.

In some embodiments, the positive electrode active material having a P6₃mc structure can be obtained through a preparation method including the following steps: (1) enabling a raw material including soluble cobalt salt to undergo liquid phase precipitation, sintering, crushing, and optional sieving, to obtain a cobalt oxide precursor, where the raw material optionally includes soluble T salt containing element T; (2) mixing the cobalt oxide precursor with sodium salt, and performing solid phase synthesis to obtain a sodium cobalt oxide precursor; and (3) heating and refluxing the sodium cobalt oxide precursor with a lithium salt solution, and then washing, drying, and sieving to obtain a positive electrode active material having a P6₃mc structure.

In some embodiments, the soluble cobalt salt can be selected one or more from the following group: cobalt chloride, cobalt acetate, cobalt sulfate, cobalt nitrate, or the like.

In some embodiments, the soluble T salt containing element T is sulfate.

In some embodiments, the solvent for the liquid phase precipitation process is water.

In some embodiments, the liquid phase precipitation process is carried out under the condition of using a precipitant.

In some embodiments, a suitable precipitant includes but is not limited to ammonium carbonate.

In some embodiments, the liquid phase precipitation process is carried out under the condition of a suitable pH value. The suitable pH value includes, for example, 5-9. The suitable pH value can further be selected from any one of the following pH values or in a pH range defined by any two of these pH values: 5, 5.5, 6, 6.5, 7, 7.5, 8, 8.5, 9, or the like.

In some embodiments, the sintering temperature for the solid phase synthesis process in step (2) is selected from 700°C-1000°C. The sintering time is selected from 36 h-56 h. The sintering atmosphere is an oxygen atmosphere.

In some embodiments, the lithium salt in the lithium salt solution can be lithium bromide.

In some embodiments, the solvent in the lithium salt solution can be an alcohol solvent. The alcohol solvent can be hexanol.

In some embodiments, the reaction temperature for heating and refluxing in step (3) is selected from 175°C-185°C, for example, 180°C. The reaction time for heating and refluxing is selected from 7.5 h-8.5 h.

The preparation method according the second aspect of this application can be achieved as follows: converting the drawback of the original spinel phase transition into the technical advantage of this application by a simple way. Specifically, lithium cobalt oxide belonging to the P6₃mc space group is annealed at a certain temperature (for example, below 300°C), and its surface layer undergoes an R-3m in-situ phase transition, thereby forming a coating structured material with a matrix belonging to the P6₃mc space group and a coating material belonging to an R-3m space group. This method provides not only a new direction for modifying performance of the lithium cobalt oxide positive electrode material but also has simple preparation process, low cost, strong practicality, and significant potential for industrial application.

### Third aspect of this application

According to the third aspect of this application, a positive electrode plate is provided, including a positive electrode active material layer, where the positive electrode active material layer includes the positive electrode material having a coating structure according to the first aspect of this application or the positive electrode material having a coating structure prepared using the preparation method according to the second aspect of this application.

In some embodiments, the positive electrode plate further includes a positive electrode current collector. In this case, the positive electrode active material layer and the positive electrode current collector are included. In some embodiments, the positive electrode active material layer is located on at least one surface of the positive electrode current collector.

In some embodiments, the positive electrode active material layer is located on only one surface of the positive electrode current collector.

In some embodiments, the positive electrode active material layer is located on both opposite surfaces of the positive electrode current collector.

In some embodiments, an aluminum foil may be used as the positive electrode current collector, or other positive electrode current collectors commonly used in the art may be used similarly.

The positive electrode active material layer may further include one or more of a conductive agent and a binder. In some embodiments, the conductive agent in the positive electrode active material layer may include one or more of carbon nanotubes, acetylene black, graphene, Ketjen black, conductive carbon black, or the like. In some embodiments, the binder in the positive electrode active material layer may include one or more of polyvinylidene fluoride, carboxymethyl cellulose, styrene-butadiene rubber, or the like. In some embodiments, a mass ratio of the positive electrode material, the conductive agent, and the binder in the positive electrode active material layer may be (84-98): (0.5-10): (0.5-5). It should be understood that the materials and the mass ratio described above are merely exemplary and are not intended to limit this application; other suitable materials and mass ratios may be used.

### Fourth aspect of this application

According to the fourth aspect of this application, an electrochemical apparatus is provided, including the positive electrode plate according to the third aspect of this application, a negative electrode plate, and a separator disposed between the positive electrode plate and the negative electrode plate.

In some embodiments, the negative electrode plate may include a negative electrode current collector and a negative electrode active material layer disposed on at least one surface of the negative electrode current collector. In some embodiments, the negative electrode active material layer is disposed on both opposite sides of the negative electrode current collector. In other embodiments, the negative electrode active material layer is disposed on only one side of the negative electrode current collector.

In some embodiments, the negative electrode active material layer includes a negative electrode active material, which includes one or more of a carbon material, a silicon material, or the like. In some embodiments, the carbon material includes one or more of graphite, hard carbon, or the like. In some embodiments, the silicon material includes one or more of silicon, silicon oxide, silicon carbide, silicon alloy, or the like. In some embodiments, the negative electrode current collector may include one or more of copper foil, aluminum foil, nickel foil, or carbon-based current collector.

The negative electrode active material layer may further include one or more of a conductive agent and a binder. In some embodiments, the conductive agent in the negative electrode active material layer includes one or more of conductive carbon black, acetylene black, carbon nanotubes, Ketjen black, conductive graphite, graphene, or the like. In some embodiments, a mass percentage of the conductive agent in the negative electrode active material layer ranges from 0.5% to 10%. In some embodiments, the binder in the negative electrode active material layer includes one or more of polyvinylidene fluoride, vinylidene fluoride-hexafluoropropylene copolymer, polyamide, polyacrylonitrile, polyacrylic ester, polyacrylic acid, polyacrylate, carboxymethyl cellulose sodium, polyvinylpyrrolidone, polyethylene ether, polymethylmethacrylate, polytetrafluoroethylene, polyhexafluoropropylene, styrene-butadiene rubber, or the like. In some embodiments, a mass percentage of the binder in the negative electrode active material layer ranges from 0.5% to 10%. It should be understood that the above is merely an example and not intended to limit this application.

In some embodiments, the separator includes a polymer, an inorganic substance, or the like formed by a material stable to the electrolyte of this application. For example, the separator may include a substrate layer and a surface treatment layer. The substrate layer is a non-woven fabric, film, or composite film of a porous structure. The substrate layer is made of at least one of polyethylene, polypropylene, polyethylene terephthalate, or polyimide. Specifically, a polypropylene porous film, a polyethylene porous film, polypropylene non-woven fabric, polyethylene non-woven fabric, or a polypropylene-polyethylene-polypropylene porous composite film may be selected. The surface treatment layer is provided on at least one surface of the substrate layer, and the surface treatment layer may be a polymer layer or an inorganic substance layer, or may be a layer formed by mixing a polymer and an inorganic substance. The inorganic substance layer includes an inorganic particle and a binder. The inorganic particle includes at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene). In some embodiments, a thickness of the separator is 5 µm to 500 µm.

The electrochemical apparatus further includes an electrolyte. The electrolyte includes a lithium salt and a non-aqueous solvent.

In some embodiments, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, the lithium salt may be LiPF₆.

In some embodiments, the non-aqueous solvent may include a carbonate compound, a carboxylate compound, an ether compound, or any suitable combination thereof.

In some embodiments, the carbonate compound may be selected from a linear carbonate compound, a cyclic carbonate compound, a fluorinated carbonate compound, or any suitable combination thereof.

In some embodiments, the linear carbonate compound may be selected from diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. The cyclic carbonate compound may be selected from ethylene carbonate (EC), propylene carbonate (PC), butylene carbonate (BC), vinyl ethylene carbonate (VEC), or a combination thereof. The fluorocarbonate compound may be selected from fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or any proper combination thereof.

In some embodiments, the carboxylate compound may be selected from methyl acetate, ethyl acetate, n-propyl acetate, tert-butyl acetate, methyl propionate, ethyl propionate, propyl propionate, γ-butyrolactone, decanolide, valerolactone, caprolactone, methyl formate, or any proper combination thereof.

In some embodiments, the ether compound may be selected from dibutyl ether, tetraglyme, diglyme, 1,2-dimethoxyethane, 1,2-diethoxyethane, ethoxymethoxy ethane, 2-methyltetrahydrofuran, tetrahydrofuran, or any proper combination thereof.

According to some embodiments of this application, the electrochemical apparatus of this application includes, but is not limited to, all types of primary batteries and secondary batteries. In some embodiments, the electrochemical apparatus is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

### Fifth aspect of this application

According to the fifth aspect of this application, an electric device is provided, including the electrochemical apparatus according to the fourth aspect of this application.

The electric device in the embodiments of this application is not particularly limited and can be used for any existing electronic apparatus. In some embodiments, the electric device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

The implementation solutions of this application are described in detail with reference to examples. It should be understood that these specific examples are merely intended to describe this application but not to limit the scope of this application.

### Test methods

### 1. XRD Test

An X-ray powder diffractometer (XRD, instrument model: Bruker D8 ADVANCE) was used to test a positive electrode material, with Cu Kα as a target material, at a voltage of 40 KV and a current of 35 mA, at a scanning angle in a range of 10° to 90°, with a scanning rate of 0.02°/s. A peak intensity of a strongest diffraction peak was required to be greater than 10,000 in units of counts. The XRD pattern collected was refined using Fullprof software to determine the phase structure and I₂/I₁.

### 2. Test for element composition of positive electrode material

The element composition of the positive electrode material was tested, where contents of elements such as Li, Na, and transition metal were measured by an inductively coupled plasma (ICP) spectrometer from the U.S. PE Company, model Optima 7000DV.

### 3. Test for discharge gram capacity and cycling capacity retention rate

After a half battery was aged at a constant temperature (25°C) for 24 h, it was repeatedly charged and discharged 50 times at a voltage in a range of 3 V to 4.6 V (relative to Li/Li⁺). The battery was charged and discharged at a low current of a rate of 0.2C for activation at the first and second cycles, and then charged and discharged at a current of a rate of 1C from the third cycle, where 1C=273 mA/g.

The discharge gram capacity at the third cycle was used as a reference baseline for cycling gram capacity decay, that is, the n-th capacity retention rate=(the n-th discharge capacity/the third discharge capacity)×100%.

### 4. Median particle size Dᵥ50 test

The median particle size Dᵥ50 of the positive electrode material was measured using a laser particle size analyzer. The instrument model was MasterSizer 3000, the sample introduction system was Hydro 2000SM & Hydro 2000MU, the measurement range was 0.01-3500 µm, the detection angle range was 0.0153-144°, the test snapshot rate was 1000 times/s, the detector was made of a photosensitive silicon material, and the test reference standard was GB/T19077-2016/ISO 13320:2009. Before the test, deionized water was added into an appropriate amount of sample under test, and then they were ultrasonically dispersed for 5 min at power of 120 W to achieve uniform dispersion.

### 5. Coating material thickness test

The lithium-ion battery was fully discharged to below 3.5 V at a current density of 0.05C, left standing for 10 min, and then disassembled in a glove box to obtain a positive electrode plate. The positive electrode plate was transferred to a chamber of a scanning electron microscope equipped with a focused ion beam (model: FEI Vion Plasma FIB) for processing to obtain a sample for analysis using a transmission scanning electron microscope (STEM, model: FEI Titan3 G2 60-300). It was required that the sample surface was protected with Pt, processed with a Ga-ion beam, with the sample thickness not exceeding 100 nm, and cleaned in low voltage mode to remove residual surface from the sample processing.

The sample was observed under STEM to measure the thickness of the coating material. At least three different positions were sampled to take the average value.

### Comparative example 1

Cobalt sulfate (CoSO₄), nickel sulfate (NiSO₄), and manganese sulfate (MnSO₄) were weighed at a molar ratio of 0.85:0.05:0.15, added with deionized water, and stirred rapidly to dissolve. Ammonium carbonate was then added to adjust the pH to 8 until the reaction was complete, forming a homogeneous carbonate precipitate. The precipitate was sintered at 650°C for 12 h, followed by processes such as crushing and sieving to obtain a cobalt-nickel-manganese oxide precursor.

Lithium carbonate (Li₂CO₃) was weighed and mixed to uniformity with the above metal oxide at a molar ratio of 1.05:1, kept at 900°C for 12 h, and post-treated to obtain a corresponding lithium cobalt oxide material (which could be denoted as a material in Comparative example 1). The Dᵥ50 of the material in Comparative example 1 was 13 µm.

The XRD test results can be seen in the XRD pattern shown in FIG. 2. The results showed that the resulting lithium cobalt oxide had an R-3m structure. The ICP test results can be seen in Table 1. The results showed that the elemental composition of the positive electrode material obtained in Comparative example 1 was Li_{1.002}Co_{0.857}Ni_{0.053}Mn_{0.090}O₂.

The material having an R-3m structure in Comparative example 1 was used as the positive electrode active material, conductive carbon (SP) was used as a conductive agent, and polyvinylidene fluoride (PVDF) was used as a binder. They were mixed at a mass ratio of 90:5:5, solvent N-methyl-2-pyrrolidone (NMP) was added to make a slurry, and the slurry was applied to an aluminum foil with a thickness of 12 µm. Then, the aluminum foil was dried in a blast drying oven at 90°C for 4 h and baked in a vacuum drying oven at 110°C for 24 h. The thoroughly dried electrode plate was subjected to processes such as cold pressing, punching, and weighing to obtain a positive electrode.

In an inert atmosphere, the above positive electrode, a separator, a negative electrode, and an electrolyte were assembled into a half cell. The negative electrode was lithium metal, the electrolyte included ethylene carbonate (EC) and dimethyl carbonate (DMC) which were at a volume ratio of 1:1, and concentration of LiPF₆ was 1mol/L.

The assembled half cell underwent electrochemical performance test. Through measurement, the initial discharge gram capacity was 205.7 mAh/g, and the capacity retention rate after 80 cycles was 68.2%.

### Comparative example 2

Cobalt sulfate (CoSO₄), nickel sulfate (NiSO₄), and manganese sulfate (MnSO₄) were weighed at a molar ratio of 0.85:0.05:0.10, added with deionized water, and stirred rapidly to dissolve. Ammonium carbonate was then added to adjust the pH to 8 until the reaction was complete, forming a homogeneous carbonate precipitate. The precipitate was sintered at 650°C for 12 h, followed by processes such as crushing and sieving to obtain a cobalt-nickel-manganese metal oxide precursor 1 (which was denoted as a precursor 1 corresponding to the foregoing cobalt oxide precursor).

Sodium carbonate (Na₂CO₃) was weighed and mixed to uniformity with the precursor 1 at a molar ratio of 0.35:1, kept at 800°C for 48 h, and post-processed to obtain a sodium cobalt oxide precursor 2 with a composition of Na_{0.7}Co_{0.85}Ni_{0.05}Mn_{0.10}O₂ (which was denoted as a precursor 2 corresponding to the sodium cobalt oxide precursor). The XRD test results showed that the resulting sodium cobalt oxide had a P6₃/mmc structure.

The sodium cobalt oxide precursor 2 was mixed to uniformity with a 5 mol/L hexanol solution with LiBr at a mass-to-volume ratio of 20 g:600 ml. The mixture was then refluxed at 180°C for 12 h until the reaction was complete. After the reaction, the resulting powder was filtered, washed with methanol, and dried in a vacuum oven at 180°C. Finally, the dried powder was sieved through a 200-mesh sieve to obtain a lithium cobalt oxide material (which could be denoted as a material in Comparative example 2).

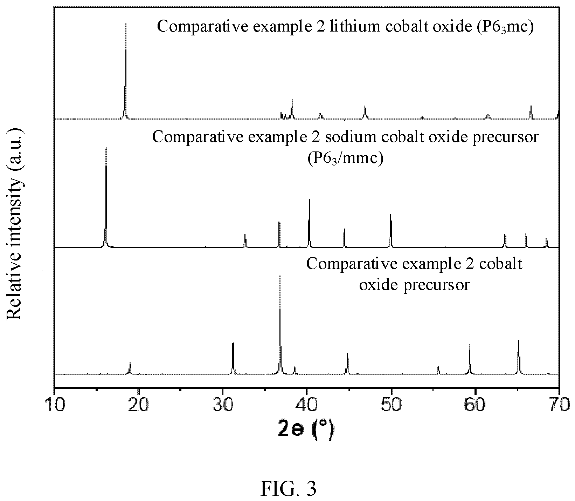

The XRD test results can be seen in the XRD patterns shown in FIG. 3. Test results showed that the positive electrode material obtained in Comparative example 2 was a pure phase belonging to a P6₃mc crystal structure. ICP test results can be seen in Table 1, showing that the elemental composition of the material in Comparative example 2 was Li_{0.912}Na_{0.007}Co_{0.854}Ni_{0.052}Mn_{0.094}O₂.

Subsequent methods for assembling and testing half cells using the material in Comparative example 2 as the positive electrode active material were completely the same as those in Comparative example 1. Experimental measurements showed that the initial discharge gram capacity of the material in Comparative example 2 was 218.4 mAh/g, with a capacity retention rate of 78.3% after 80 cycles.

### Examples 1 to 5: Change annealing temperature

About 10 g of the material having a P6₃mc structure in Comparative example 2 was placed in a tube furnace, heated to a preset holding temperature (T, corresponding to the annealing temperature) at a rate of 1.5°C/min, and held for 30 min, and then cooled along with the furnace to obtain a composite material with a matrix and a coating material respectively having a P6₃mc structure and an R-3m structure (a positive electrode material with an R-3m@P6₃mc coating structure). The subsequent methods for making and testing half cells using the resulting positive electrode material were the same as those in Comparative example 2. The holding temperatures T for the materials in Examples 1 to 5 were 250°C, 270°C, 280°C, 290°C, and 300°C respectively, and the resulting positive electrode materials were denoted as a material in Example 1, a material in Example 2, a material in Example 3, a material in Example 4, and a material in Example 5, respectively. The subsequent test processes for the resulting positive electrode materials were the same as those in Comparative example 2. The powder test results and electrochemical performance test results of the materials can be seen in Table 1.

### Examples 6 to 9: Change annealing time

About 10 g of the material having a P6₃mc structure in Comparative example 2 was placed in a tube furnace, heated to 270°C at a rate of 1.5°C/min, and held for a certain time (t, corresponding to the foregoing annealing time), and then cooled along with the furnace to obtain a composite material with a matrix and a coating material respectively having a P6₃mc structure and an R-3m structure (a positive electrode material with an R-3m@P6₃mc coating structure). The subsequent methods for making and testing half cells using the resulting positive electrode material were the same as those in Comparative example 2. The holding times t for the materials in Examples 6 to 9 were 15 min, 45 min, 60 min, and 75 min respectively, and the resulting positive electrode materials were denoted as a material in Example 6, a material in Example 7, a material in Example 8, and a material in Example 9, respectively. The subsequent test processes for the resulting positive electrode materials were the same as those in Comparative example 2. The powder test results and electrochemical performance test results of the materials in Examples 6 to 9 can be seen in Table 1.

### Example 10: Change doping element

Cobalt sulfate (CoSO₄) and zinc sulfate (ZnSO₄) were weighed at a molar ratio of 0.85:0.15, added with deionized water, and stirred rapidly to dissolve. Ammonium carbonate was then added to adjust the pH to 8 until the reaction was complete, forming a homogeneous carbonate precipitate. The precipitate was sintered at 650°C for 12 h, followed by processes such as crushing and sieving to obtain a cobalt-zinc metal oxide precursor 1 (corresponding to the foregoing cobalt oxide precursor).

Sodium carbonate (Na₂CO₃) was weighed and mixed to uniformity with the precursor 1 at a molar ratio of 0.35:1, kept at 800°C for 48 h, and post-processed to obtain a sodium cobalt oxide precursor 2 with a composition of Na_{0.7}Co_{0.85}Zn_{0.15}O₂ (corresponding to the sodium cobalt oxide precursor).

The sodium cobalt oxide precursor 2 doped with zinc was mixed to uniformity with a 5 mol/L hexanol solution with LiBr at a mass-to-volume ratio of 20 g:600 mL. The mixture was then refluxed at 180°C for 12 h until the reaction was complete. After the reaction, the resulting powder was filtered, washed with methanol, and dried in a vacuum oven at 180°C. Finally, the dried powder was sieved through a 200-mesh sieve to obtain a lithium cobalt oxide material doped with zinc and having a P6₃mc structure.

About 10 g of the lithium cobalt oxide material doped with zinc and having a P6₃mc structure was placed in a tube furnace, heated to 270°C at a rate of 1.5°C/min, kept for 45 min with the temperature unchanged, and then cooled along with the furnace to obtain a composite material with a matrix and a coating material respectively having a P6₃mc structure and an R-3m structure (a positive electrode material with an R-3m@P6₃mc coating structure) (which was denoted as a material in Example 10). The subsequent test processes for the resulting positive electrode materials were the same as those in Comparative example 2. The powder test results and electrochemical performance test results of the material in Example 10 can be seen in Table 1.

### Examples 11 to 17: Change doping element

The remaining steps and test processes of the material preparation methods in Examples 11 to 17 were the same as those in Example 10 except for replacing zinc sulfate with aluminum nitrate, manganese sulfate, yttrium nitrate, zirconium nitrate, lanthanum nitrate, nickel sulfate, and titanium nitrate respectively, and adding these soluble salts together with cobalt sulfate into deionized water. The powder test results and electrochemical performance test results of the materials can be seen in Table 1.

In Table 1, I₂/I₁ is the ratio of the intensity (I₁) of the diffraction peak in the 2θ diffraction angle range of 44°-46° to the intensity (I₁) of the strongest diffraction peak in the 2θ diffraction angle range of 18°-19° in the XRD pattern.

In Table 1, m represents a mass percentage of the R-3m structure in the positive electrode material having the R-3m@P6₃mc coating structure. m was obtained through XRD refined quantitative phase analysis.

**Table 1**

| No. | Element composition | Space group to which a matrix belongs | Space group to which a coating material belongs | Coating material thickness (nm) | I₂/I₁ | m | First cycle discharge gram capacity (mAh/g) | Capacity retention rate after 80 cycles |
|---|---|---|---|---|---|---|---|---|
| Comparative example 1 | Li_{1.002}Co_{0.857}Ni_{0.053}Mn_{0.090}O₂ | R-3m | / | / | / | / | 205.7 | 62.2% |
| Comparative example 2 | Li_{0.912}Na_{0.007}Co_{0.854}Ni_{0.052}Mn_{0.094}O₂ | P6₃mc | / | / | / | / | 218.4 | 75.3% |
| Example 1 | Li0_{.91}Na_{0.007}Co_{0.856}Ni_{0.053}Mn_{0.091}O₂ | P6₃mc | R-3m | 14 | 1.30% | 0.47% | 217.9 | 84.8% |
| Example 2 | Li_{0.912}Na_{0.008}Co_{0.852}Ni_{0.055}Mn_{0.093}O₂ | P6₃mc | R-3m | 44 | 2.90% | 1.46% | 217.7 | 89.2% |
| Example 3 | Li_{0.914}Na_{0.008}Co_{0.853}Ni_{0.053}Mn_{0.094}O₂ | P6₃mc | R-3m | 106 | 5.20% | 3.45% | 215.6 | 89.5% |
| Example 4 | Li_{0.91}Na_{0.008}Co_{0.855}Ni_{0.052}Mn_{0.093}O₂ | P6₃mc | R-3m | 163 | 7.90% | 5.24% | 212.6 | 90.3% |
| Example 5 | Li_{0.915}Na_{0.008}Co_{0.853}Ni_{0.051}Mn_{0.096}O₂ | P6₃mc | R-3m | 258 | 10.90% | 8.13% | 202.5 | 79.1% |
| Example 6 | Li_{0.913}Na_{0.008}Co_{0.855}Ni_{0.052}Mn_{0.093}O₂ | P6₃mc | R-3m | 29 | 1.60% | 0.95% | 218.2 | 86.3% |
| Example 7 | Li_{0.91}Na_{0.007}Co_{0.852}Ni_{0.052}Mn_{0.096}O₂ | P6₃mc | R-3m | 75 | 3.50% | 2.46% | 217.2 | 90.5% |
| Example 8 | Li_{0.913}Na_{0.007}Co_{0.857}Ni_{0.052}Mn_{0.091}O₂ | P6₃mc | R-3m | 129 | 5.40% | 4.18% | 214.3 | 88.3% |
| Example 9 | Li_{0.913}Na_{0.008}Co_{0.856}Ni_{0.055}Mn_{0.089}O₂ | P6₃mc | R-3m | 157 | 8.50% | 5.05% | 210.8 | 83.4% |
| Example 10 | Li_{0.908}Na_{0.004}Co_{0.847}Zn_{0.151}O₂ | P6₃mc | R-3m | 82 | 2.90% | 2.68% | 221.5 | 87.9% |
| Example 11 | Li_{0.908}Na_{0.002}Co_{0.849}Al_{0.15}O₂ | P6₃mc | R-3m | 83 | 4.20% | 2.73% | 216.4 | 92.8% |
| Example 12 | Li_{0.912}Na_{0.005}Co_{0.869}Mn_{0.133}O₂ | P6₃mc | R-3m | 75 | 3.80% | 2.45% | 219.6 | 86.9% |
| Example 13 | Li_{0.913}Na_{0.005}Co_{0.872}Y_{0.129}O₂ | P6₃mc | R-3m | 81 | 3.10% | 2.66% | 221.9 | 89.5% |
| Example 14 | Li_{0.914}Na_{0.006}Co0_{.903}Zr_{0.096}O₂ | P6₃mc | R-3m | 87 | 4.40% | 2.84% | 223.1 | 92.0% |
| Example 15 | Li_{0.913}Na_{0.005}Co_{0.91}La_{0.089}O₂ | P6₃mc | R-3m | 78 | 4.10% | 2.57% | 222.8 | 86.1% |
| Example 16 | Li_{0.912}Na_{0.008}Co_{0.922}Ni_{0.077}O₂ | P6₃mc | R-3m | 92 | 4.90% | 3.00% | 223.1 | 92.4% |
| Example 17 | Li_{0.913}Na_{0.001}Co_{0.94}Ti_{0.065}O₂ | P6₃mc | R-3m | 85 | 3.10% | 2.77% | 225.9 | 86.9% |

The lithium cobalt oxide positive electrode material having a coating structure prepared in this application mainly includes a matrix and a coating material respectively having P6₃mc and R-3m crystal structures (denoted as the R-3m@P6₃mc coating structure).

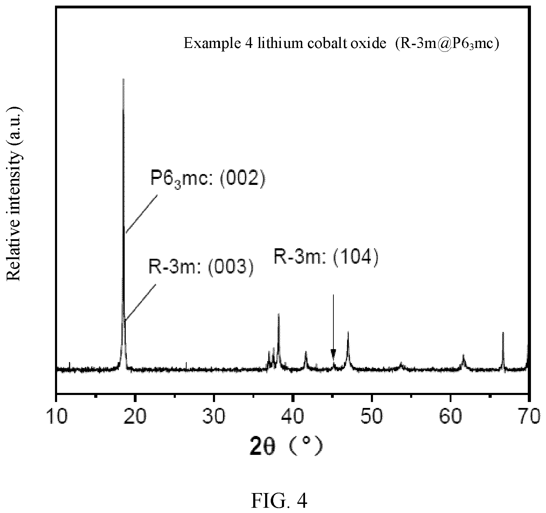

To confirm this structure, the XRD pattern of the material in Example 4 was first tested. The XRD test result can be seen in the XRD pattern shown in FIG. 4. The test results indicate that the phase composition of the material in Example 4 was lithium cobalt oxide having the main phase P6₃mc compounded with a small amount of R-3m structure. Through XRD structural refinement, the mass percentage m of the R-3m structure material was 5.24%.

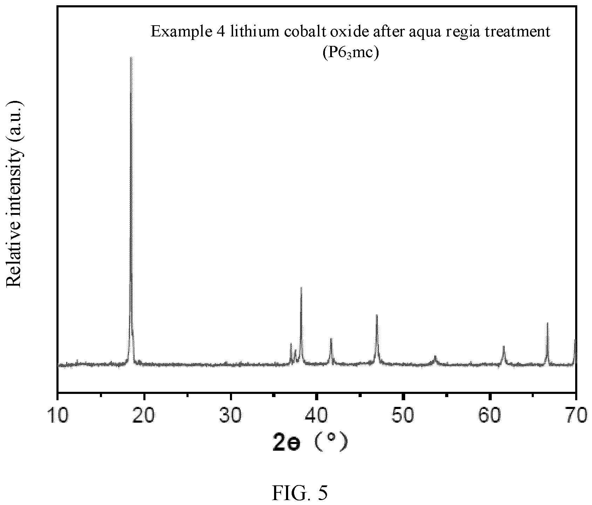

Further, a small amount of the material in Example 4 was taken and placed in an 80°C aqua regia solution (concentrated hydrochloric acid and concentrated nitric acid at a volume ratio of V_conc _{HCl}:V_conc _{HNO3}=3:1). The hot aqua regia could slowly erode the lithium cobalt oxide material from the surface. After soaked for about 30 min, the remaining powder was filtered out, washed, and dried, and then the material was subjected to the XRD test again. Referring to the XRD pattern shown in FIG. 5, the XRD test results indicate that after the material from Example 4 was treated with aqua regia, the resulting material contained only the P6₃mc structure, and the original R-3m structure had completely dissolved. This was specifically manifested by disappearance of the characteristic diffraction peak near 45°. This indicates that the lithium cobalt oxide having the R-3m structure mainly exists in the surface layer of the material (for example, the coating layer), and the positive electrode material prepared in this application has an R-3m@P6₃mc coating structure.

Through comparison of the XRD diffraction pattern between Example 4 and Comparative example 2, it can be seen that the XRD diffraction pattern of the material in Example 4 has one more diffraction pattern of the R-3m structure. The (003) crystal plane diffraction peak of the R-3m structure of the material in Example 4 is located around 18.5° and highly overlaps with the (002) crystal plane diffraction peak of the main phase, the P6₃mc structure. This indicates that the lithium cobalt oxide material having an R-3m structure is also in a lithium-deficient state, like the lithium cobalt oxide having a P6₃mc structure of the material in Example 4 before the aqua regia treatment. This further indicates that the lithium cobalt oxide material having an R-3m structure in each example (including the material in Example 4) is obtained by in-situ transformation from the lithium cobalt oxide material having a P6₃mc structure. Additionally, it can also be seen that there is only one diffraction peak near the 45° diffraction angle, which belongs to the (104) crystal plane diffraction peak of the lithium cobalt oxide having an R-3m structure. This can be used as a characteristic diffraction peak to identify whether the lithium cobalt oxide having an R-3m structure exists.

Through comparison of test data between Examples 1 to 17 and Comparative examples 1 and 2, it can be seen that in terms of overall electrochemical performance of the positive electrode materials: R-3m@P6₃mc structure>P6₃mc structure>R-3m structure. In a case of similar compositions, the lithium cobalt oxide material having an R-3m structure has the worst initial discharge gram capacity and cycling stability. For example, when charged to 4.6 V, the material in Comparative example 1 has an initial discharge gram capacity of 205 mAh/g and a capacity retention rate of 62.2% after 80 cycles. The lithium cobalt oxide having a pure P6₃mc structure (for example, the material of Comparative example 2) has a significantly better initial discharge gram capacity than the lithium cobalt oxide material including an R-3m structure, mainly due to its material characteristics that can maintain structural stability under a high lithium-depleted state. However, due to the lack of interface protection on the material surface, the dissolution of transition metal element is severe during cycling, resulting in a capacity retention rate of only 75.3% after 80 cycles. As can be seen from Table 1, the lithium cobalt oxide material having the R-3m@P6₃mc coating structure provided in this application has significant advantages.

The technical features of the foregoing embodiments and examples can be combined in any suitable manner. To make the description concise, not all possible combinations of the technical features in the foregoing embodiments and examples are described. However, as long as these combinations do not conflict, they should be considered within the scope of this specification.

The above examples merely represent several embodiments of this application, facilitating specific and detailed understanding of the technical solution of this application, but they should not be construed as limiting the scope of protection of this application. It should be noted that those of ordinary skill in the art can further make several modifications and improvements without departing from the concept of this application, and these modifications and improvements also fall within the protection scope of this application. Furthermore, it should be understood that after reading the content described above of this application, those skilled in the art may make various changes or modifications to this application, and the obtained equivalent forms similarly fall within the scope of protection of this application. It should also be understood that the technical solutions obtained by those skilled in the art based on the technical solution provided by this application, through logical analysis, reasoning, or limited experiments, are all within the scope of protection of the appended claims of this application. Therefore, the scope of protection of this application should be based on the content of the appended claims, and the specification and drawings can be used to describes the content of the claims.

## Claims

1. A positive electrode material, comprising a matrix and a coating material located on at least a portion of a surface of the matrix, wherein the matrix comprises a first compound having a P6₃mc structure, and the coating material comprises a second compound having an R-3m structure.

2. The positive electrode material according to claim 1, wherein the coating material has a thickness of 10 nm to 300 nm.

3. The positive electrode material according to claim 1, wherein the first compound is lithium cobalt oxide, and the first compound comprises element Co and optional element T, wherein the element T comprises at least one of Ni, Mn, Ti, Zn, Y, La, Zr, Mg, Fe, Cu, Nb, Cr, or Al; and in the first compound, a sum of molar contents of the element Co and the element T is n_{Co+T}, the molar content of the element T is n_{T}, and a ratio y1 of n_{T} to n_{Co+T} satisfies 0≤y1≤0.15.

4. The positive electrode material according to claim 3, wherein the first compound further comprises element Na, in the first compound, a molar content of the element Na is n_{Na}, and a ratio z1 of n_{Na} to n_{Co+T} satisfies 0<z1≤0.03.

5. The positive electrode material according to claim 1, wherein the second compound is lithium cobalt oxide, and the second compound comprises element Co and optional element Q, wherein the element Q comprises at least one of Ni, Mn, Ti, Zn, Y, La, Zr, Mg, Fe, Cu, Nb, Cr, or Al; and in the second compound, a sum of molar contents of the element Co and the element Q is m_{Co+Q}, the molar content of the element Q is m_{Q}, and a ratio y2 of m_{Q} to m_{Co+Q} satisfies 0≤y2≤0.5.

6. The positive electrode material according to claim 5, wherein the second compound further comprises element Na, in the second compound, a molar content of the element Na is m_{Na}, and a ratio z2 of m_{Na} to m_{Co+Q} satisfies 0<z2≤0.03.

7. The positive electrode material according to claim 1, wherein in an X-ray diffraction pattern of the positive electrode material, a peak intensity of a strongest diffraction peak in a 2θ diffraction angle range of 18°-19° is I₁, and a peak intensity of a strongest diffraction peak in a 2θ diffraction angle range of 44°-46° is I₂, satisfying 1%≤I₂/I₁≤11%.

8. The positive electrode material according to claim 1, satisfying at least one of the following conditions:
condition a1: a mass percentage m of the coating material in the positive electrode material satisfies 0<m≤10%, m being obtained through XRD refined quantitative phase analysis; or
condition a2: a median particle size Dᵥ50 of the positive electrode material is 10 µm to 25 µm.

9. An electrochemical apparatus, comprising a positive electrode plate, wherein the positive electrode plate comprises the positive electrode material according to any one of claims 1 to 8.

10. An electric device, comprising the electrochemical apparatus according to claim 9.
